# EUROPÄISCHE PATENTSCHRIFT

(11) **EP 3 902 717 B1**
(45) Veröffentlichungstag und Bekanntmachung des Hinweises auf die Patenterteilung: **16.08.2023**
(21) Anmeldenummer: 19832370.1
(22) Anmeldetag: 19.12.2019
(51) Int. Cl.: B60S 1/38

(54) **WISCHBLATT**
WIPER BLADE
BALAI D'ESSUIE-GLACE

(30) Priorität: 27.12.2018 DE 102018251733
(43) Veröffentlichungstag der Anmeldung: 03.11.2021
(73) Patentinhaber: Robert Bosch GmbH, 70442 Stuttgart (DE)
(72) Erfinder: APPELTANS, Ine, 3540 Herk-de-Stad (BE); DEPONDT, Helmut, 3370 Boutersem (BE)
(86) Internationale Anmeldenummer: PCT/EP2019/086401
(87) Internationale Veröffentlichungsnummer: WO 2020/136089

(56) Entgegenhaltungen:
- WO-A1-2012/139645
- FR-A1- 2 871 127
- US-A1- 2009 223 010
- US-A1- 2014 237 750

## Beschreibung

### Stand der Technik

Die Erfindung betrifft ein Wischblatt nach der Gattung des unabhängigen Anspruchs.

Es sind Wischblätter bekannt, die einen elastisch nachgiebigen Wischleistenträger aus einem Kunststoff aufweisen, in dem in einen Hohlkanal ein Tragelement, insbesondere ein bandartiger Federstahl, eingesetzt ist. Ein Anschlusselement zur Verbindung des Wischblatt mit einem Wischarm ist dabei über Aussparungen des Wischleistenelements und entsprechende Profile ebenfalls mit dem Tragelement verbunden.

Aus der DE 10 2011 005 171 A1 ist eine Wischblattadaptervorrichtung, insbesondere für eine Kraftfahrzeugscheibenwischvorrichtung, mit einem Wischblattadapter bekannt, der zumindest ein federelastisches Rastmittel zum Koppeln an eine Wischleisteneinheit aufweist, wobei zumindest ein Sicherungsmittel dazu vorgesehen ist, das zumindest eine Rastmittel in einem montierten Zustand zu sichern. Wenn sich das Rastmittel und das Sicherungsmittel in der Verriegelungsposition befinden, sichert das Rastmittel ein Trägerelement der Wischleiste vor einem Verschieben relativ zum Wischblatt in Längsrichtung.

Aus der FR 2925001 B1 ist ein Wischblatt mit einer Tragstruktur bekannt, in die ein flexibles Tragelement in Längsrichtung eingesetzt ist und an dessen Seiten Öffnungen ausgebildet sind für die seitlichen Ränder des Tragelements sowie einen Verbinder, der im Wesentlichen quer zu der Tragstruktur an den Öffnungen angebracht ist und der in seiner Einsetzrichtung gehalten ist durch Seitenkantenabschnitte des Tragelements, die aus den Öffnungen hervorragen. Der Verbinder weist mindestens eine Verformung auf, die sich innerhalb einer Kerbe erstreckt, die an dem Tragelement an einem Seitenkantenabschnitt ausgebildet ist, der über eine Öffnung zugänglich ist und durch die eine Verschiebung des Tragelement gehindert wird. FR-A-2871127 offenbart den Oberbegriff des Anspruchs 1.

### OFFENBARUNG DER ERFINDUNG

Das Wischblatt mit den Merkmalen des Hauptanspruchs 1 hat den Vorteil, dass das Tragelement in Längsrichtung gegen Verschiebungen gesichert wird. Es kann nicht vorkommen, dass sich das Tragelement, beispielsweise ein flaches Federstahlband in erheblichem Maße verschiebt. Dies ist insbesondere wichtig, da eine Vorspannung und Vorbiegung eines solchen Federstahlbandes abgestimmt auf den Einsatz des Wischblatt erfolgt und nur durch dieses die Anpresskräfte auf die Windschutzscheibe über die gesamte Länge des Wischblatt verteilt werden. Bei einer Verschiebung kann das Wischblatt nicht mehr bestimmungsgemäß arbeiten. Ein Gesamtaufbau mit einem Wischleistenträger, in den das Trägerelement eingeschoben wird und als weiteres Bauteil nur ein Anschluss Adapter erforderlich ist, da beispielsweise die Wischlippe oder ein Spoiler co-extrudiert bzw. im Spritzgussverfahren angespritzt werden, ist jedoch eine vorteilhafte Ausführungsform mit nur wenigen Bauteilen. Durch die Merkmale des unabhängigen Anspruchs kann diese kostengünstige und leicht zu montierende Bauform eingesetzt werden, ohne dass es zu Verschiebungen des Federstahlbandes kommt. Wenn das Tragelement, insbesondere ein einzelnes Federstahlband abwechselnd durch den Kanal des Wischleistenträgers und im Bereich von Ausnehmungen des Wischleistenträgers durch beispielsweise Nuten von Halteelementen des Anschlussadapters geführt wird, so wird der Anschlussadapter nicht demontierbar fest mit dem Wischblatt verbunden.

Durch die in den Unteransprüchen aufgeführten Maßnahmen ergeben sich weiterhin vorteilhafte Weiterbildungen und Verbesserungen der in dem Hauptanspruch angegebenen Merkmale.

Vorteilhaft ist das das Tragelement ein flaches Federstahlband.

In einer günstigen Ausgestaltung werden die Anlageflächen des Tragelements durch einen Ausschnitt gebildet. In der einfachsten Form und beispielsweise bei einem Federstahlband kann seitlich ein kleiner Ausschnitt aus diesem herausgeschnitten sein, durch den der Blockierstift hindurchführt. Wenn sich das Tragelement bzw. Federstahlband dann in Längsrichtung bewegen will, schlägt es mit den Kanten des Ausschnitts jeweils in beiden Richtungen auf den Blockierstift auf.

Nach der Erfindung ist der Blockierstift ein Rundstift mit Kegelabschrägung und Arretierungskante, wobei die Kegelabschrägung beim Einsetzen in eine Bohrung über eine Rastkante gleiten kann und nach dem Einrasten der Rundstift an der Arretierungskante durch die Rastkante gehalten werden kann. Wenn ein Blockierstift eine Abschrägung aufweist, die mit einer Rastkante zusammenwirkt, und er bei vollständigem Eindrücken einrastet, ergibt sich eine einfache und leichte Montagemöglichkeit. Eine Ausführung als rotationsymmetrischer Rundstift mit einer Abschrägung in Kegelform ergibt eine kostengünstig herzustellende Ausführung, die leicht zu montieren ist, da keine Orientierung eingehalten werden muss. Zugleich kann durch eine solche Abschrägung der Rundstift auch an beispielsweise einem Federstahlband als Tragelement vorbeigleiten, wenn er in eine seitlich angeordnete Bohrung des Anschluss Adapter eingeführt wird.

In günstiger Ausgestaltung weist der Rundstift eine Anschlagkante für das Tragelement auf.

Vorteilhaft werden die Anlageflächen im Anschlussadapter durch eine teilweise offenen Zylinderfläche gebildet. In seiner Position ist der Rundstift dann über einen erheblichen Teil seines Umfangs abgestützt und steht beispielsweise mit seinem restlichen Umfang vor, der mit einer Ausnehmung des Tragelements zusammen wirkt.

Die Bohrung kann senkrecht zu dem als flachen Federstahl ausgebildeten Tragelement angeordnet sein. Dies ermöglicht beispielsweise eine Montage durch Einschieben von unten in den Anschlussadapter in einem Bereich, in dem der Wischleistenträger entsprechend offen ist.

Vorteilhaft ist die Bohrung seitlich am Rand des Federstahlbands angeordnet.

In einer vorteilhaften Weiterbildung besteht der Wischleistenträger aus Kunststoff und ist eine Wischlippe co-extrudiert angeformt.

Der Wischleistenträger kann aus Kunststoff bestehen und ein Spoiler co-extrudiert angeformt sein. Durch die Kombination von Kunststoffen mit unterschiedlichen Eigenschaften, insbesondere elastischen Polymeren, kann kostengünstig in einem Bauteil eine Kombination verschiedener Funktionen erreicht werden, wie im Beispielsfall Wischlippe und Spoiler. Durch die bisher schon beschriebenen Merkmale lässt sich insgesamt ein Wischblatt mit wenigen Bauteilen kostengünstig Herstellen.

### Beschreibung der Zeichnungen

Ausführungsbeispiele sind in den Zeichnungen dargestellt und in der nachfolgenden Beschreibung näher erläutert. Es zeigen:
- Fig. 1: ein Wischblatt,
- Fig. 2: das Wischblatt als Sprengbild,
- Fig. 3: einen Wischleistenträger mit einem Anschlussadapterunterteil,
- Fig. 4: den Wischleistenträger und das Anschlussadapterunterteil,
- Fig. 5: das Wischblatt in einer Montageposition,
- Fig. 6: den Wischleistenträger mit Tragelement und Anschlussadapterunterteil,
- Fig. 7: im Querschnitt eine Detailansicht,
- Fig. 8: im Querschnitt eine Detailansicht mit einem eingesetzten Blockierstift und
- Fig. 9: eine Ansicht auf das Wischblatt von unten im Bereich des Anschlussadapters.

### Beschreibung der Ausführungsbeispiele

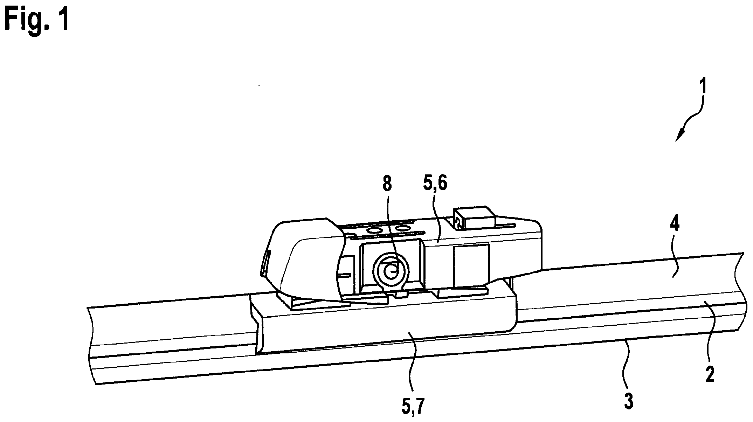

Die Fig. 1 zeigt ein Wischblatt 1, mit einem Wischleistenträger 2, an dem co-extrudiert eine Wischlippe 3 sowie ein Spoiler 4 angeformt sind. Zur Verbindung des Wischblatts 1 mit einem Wischarm ist ein Anschlussadapter 5 vorgesehen, der aus einem Anschlussadapteroberteil 6 und einem Anschlussadapterunterteil 7, das mit dem Wischleistenträger 2 verbunden ist, besteht und die durch ein Gelenk 8 drehbar miteinander verbunden sind.

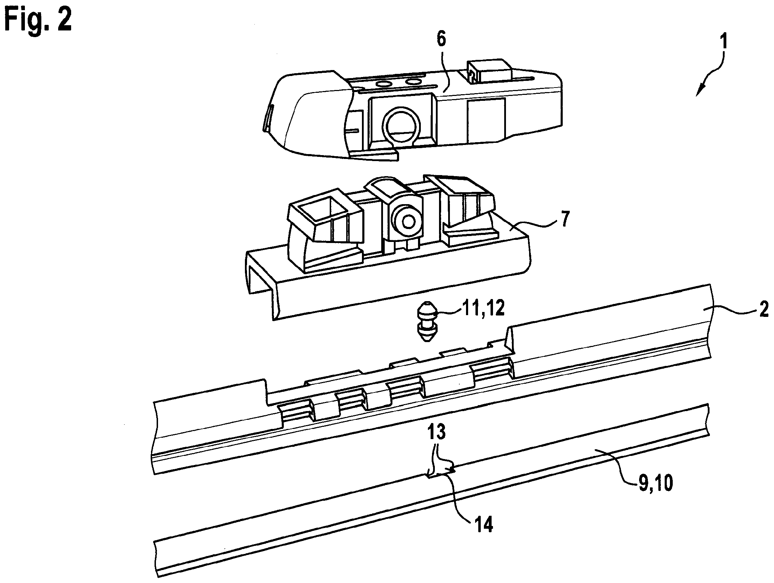

Die Fig. 2 zeigt das Wischblatt 1 als Sprengbild, mit dem Anschlussadapteroberteil 6, dem Anschlussadapterunterteil 7, dem Wischleistenträger 2 und einem Tragelement 9 in Form eines Federstahlbandes 10. Zusätzlich ist noch ein Blockierstift 11 in Form eines Rundstifts 12 dargestellt, der mit Anschlagflächen 13 in einer Ausnehmung 14 des Tragelements 8 zusammenwirkt.

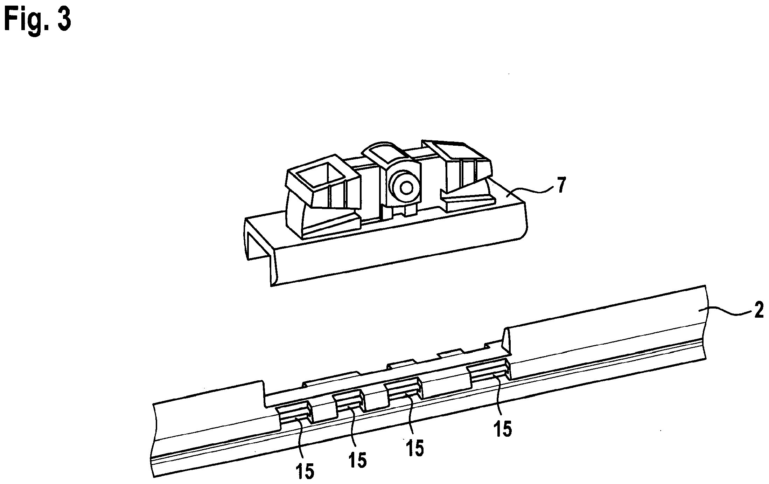

Die Fig. 3 zeigt den Wischleistenträger 2 mit einem Anschlussadapterunterteil 7. Der Wischleistenträger 2 ist in dieser Darstellung ohne Tragelement 9 abgebildet. Es sind Ausnehmungen 15 des Wischleistenträger so vorhanden, dass wenn ein Tragelement 9 in einem durch die Ausnehmungen 15 geöffneten Kanal sich befindet, das Tragelement 9 von Halteelementen des Anschlussadapterunterteil 7 umfasst werden kann und somit das Anschlussadapterunterteil 7 und der Wischleistenträger 2 miteinander verbunden werden.

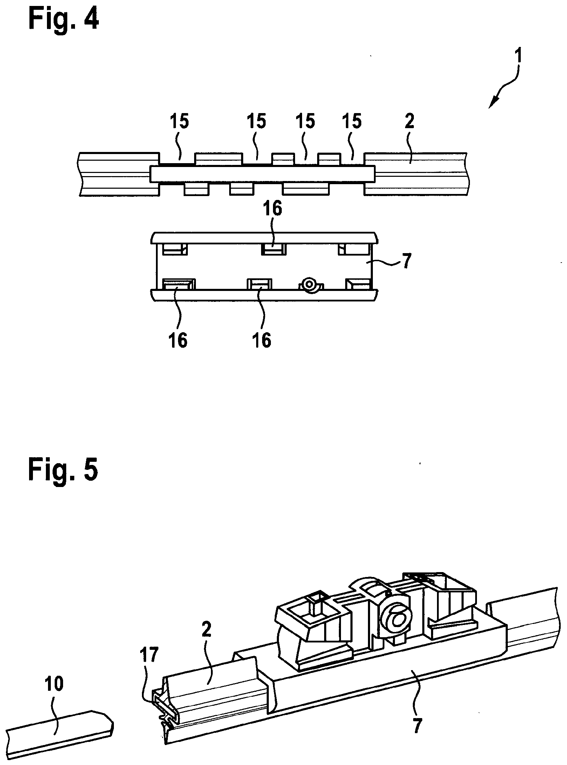

Die Fig. 4 zeigt den Wischleistenträger 2 und von der Unterseite das Anschlussadapterunterteil 7. Die Ausnehmungen 15 in dem Wischleistenträger 3 legen einen Kanal für das Tragelement 9 bzw. das Federstahlband 10 frei. In den Positionen der Ausnehmungen 15 befinden sich bei aufgesetztem Anschlussadapterunterteil 7 entsprechende Halteelemente 16.

Die Fig. 5 zeigt das Wischblatt 1 in einer Montageposition. Um den Wischleistenträger 2 und das Anschlussadapterunterteil 7 miteinander zu verbinden, wird das Federstahlband 10 vom Stirnende her in einen Kanal 17 in dem Wischleistenträger 2 eingeschoben.

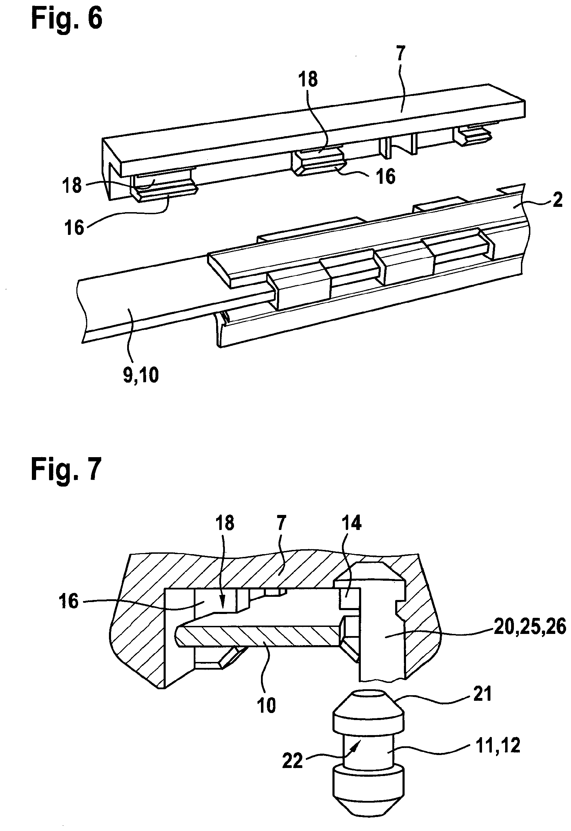

Die Fig. 6 zeigt den Wischleistenträger 2 mit eingesetztem Tragelement 9 in Form des Federstahlbandes 10 und Anschlussadapterunterteil 7 in angeschnittener Darstellung darüber angeordnet. Die Halteelemente 16 können mit einer Nut 18 das Federstahlband 10 umgreifen.

Die Fig. 7 zeigt im Querschnitt eine Detailansicht des Anschlussadapterunterteils 7. Das Federstahlband 10 ist durch das Anschlussadapterunterteil 7 hindurchgeführt und wird von den Halteelementen 16 und deren Nuten 18 umgriffen. Seitlich zu dem Federstahlband 10 befindet sich eine Bohrung 20, in die der Blockierstift 11 in Form des Rundstifts 12 eingesetzt werden kann, die durch ihre Zylinderfläche 25 als Anlageflächen 26 in dem Anschlussadapter 5 den Rundstift 12 abstützt. An seiner Oberseite besitzt der Rundstift 12 eine Kegelabschrägung 21 und darunter eine Arretierungskante 22. Mit der Bohrung 20 ausgerichtet kommt die Ausnehmung 14 des Federstahlbands 10 zu liegen.

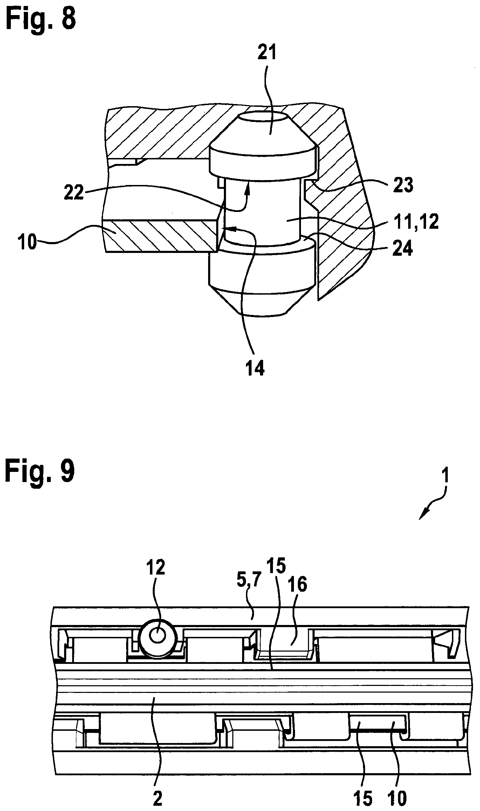

Die Fig. 8 zeigt im Querschnitt eine Detailansicht mit einem eingesetzten Blockierstift 11 bzw. Rundstift 12. Beim Hineindrücken des Rundstifts 12 geleitet dieser mit der Kegelabschrägung 21 an dem Federstahlband 10 vorbei. Ebenso kommt durch die Kegelabschrägung 21 der Rundstift 12 über eine Rastkante 23 bis in seine Endposition, in der er durch die Arretierungskante 22 an der Rastkante 23 gehalten wird, wie dargestellt. In dieser Position befindet sich der mittlere Abschnitt des Rundstifts 12 in der Ausnehmung 14 des Federstahlbands 10. Eine Anschlagkante 24 liegt an dem Federstahlband 10 an.

Die Fig. 9 zeigt eine Ansicht auf das Wischblatt 1 von unten im Bereich des Anschlussadapters 5 mit seinem Anschlussadapterunterteil 7. Das Federstahlband 10 ist in den Ausnehmungen 15 des Wischleistenträgers 2 sichtbar und wird hier von Halteelemente 16 umgriffen. Der Rundstift 12 sichert das Federstahlband 10 gegen eine Verschiebung in der Längsrichtung.

## Patentansprüche

1. Wischblatt mit einem Anschlussadapter (5) und mindestens einer Wischleiste (1) und einem elastisch nachgiebigen Wischleistenträger (2), insbesondere aus Kunststoff, der im Querschnitt in einem oder mehreren Kanälen (17) ein Tragelement (9) aufnimmt, wobei das Tragelement (9) im Bereich des Anschlussadapters (5) in Ausnehmungen (15) des Wischleistenträgers (2) zumindest teilweise von Halteelementen (16) des Anschlussadapters (5) umgriffen wird, sodass durch das Tragelement (9) der Anschlussadapter (5) mit dem Wischleistenträger (2) verbunden wird, wobei ein in den Anschlussadapter (5) eingeschobener Blockierstift (11) durch Anlageflächen (26) im Anschlussadapter (5) wie auch Anlageflächen des Tragelements (9) das Tragelement (9) in seiner Position in Längsrichtung des Wischleistenträgers (2) in Bezug auf den Anschlussadapter (5) festlegt, **dadurch gekennzeichnet, dass** der Blockierstift (11) ein Rundstift (12) mit Kegelabschrägung (21) und Arretierungskante (22) ist, wobei die Kegelabschrägung (21) beim Einsetzen in eine Bohrung (20) über eine Rastkante (23) gleiten kann und nach dem Einrasten der Rundstift (12) an der Arretierungskante (22) durch die Rastkante (23) gehalten werden kann.

2. Wischblatt nach Anspruch 1,
**dadurch gekennzeichnet,**
**dass** das Tragelement (9) ein flaches Federstahlband (10) ist.

3. Wischblatt nach Anspruch 1 oder 2,
**dadurch gekennzeichnet,**
**dass** die Anlageflächen des Tragelements (9) durch einen Ausschnitt (14) gebildet werden.

4. Wischblatt nach einem der vorhergehenden Ansprüche,
**dadurch gekennzeichnet,**
**dass** der Rundstift (12) eine Anschlagkante (24) für das Tragelement (9) aufweist.

5. Wischblatt nach einem der vorhergehenden Ansprüche,
**dadurch gekennzeichnet,**
**dass** die Anlageflächen (26) im Anschlussadapter (5) durch eine teilweise offenen Zylinderfläche (25) gebildet werden.

6. Wischblatt nach einem der vorhergehenden Ansprüche,
**dadurch gekennzeichnet,**
**dass** die Bohrung (20) senkrecht zu dem als flachen Federstahl (10) ausgebildeten Tragelement (9) angeordnet ist.

7. Wischblatt nach Anspruch 6,
**dadurch gekennzeichnet,**
**dass** die Bohrung (20) seitlich am Rand des Federstahlbands (10) angeordnet ist

8. Wischblatt nach einem der vorhergehenden Ansprüche,
**dadurch gekennzeichnet,**
**dass** der Wischleistenträger (2) aus Kunststoff besteht und eine Wischlippe (3) co-extrudiert angeformt ist.

9. Wischblatt nach einem der vorhergehenden Ansprüche,
**dadurch gekennzeichnet,**
**dass** der Wischleistenträger (2) aus Kunststoff besteht und ein Spoiler (4) co-extrudiert angeformt ist.

## Claims

1. Wiper blade with a connection adapter (5) and at least one wiper strip (1) and an elastically flexible wiper strip carrier (2), in particular made from plastic, which, in cross section, receives a supporting element (9) in one or more channels (17), in the region of the connection adapter (5), the supporting element (9) at least partially embraced in recesses (15) in the wiper strip carrier (2) by retaining elements (16) of the connection adapter (5) such that the connection adapter (5) is connected to the wiper strip carrier (2) by the supporting element (9), wherein a blocking pin (11) which is pushed into the connection adapter (5) secures the supporting element (9) in its position in the longitudinal direction of the wiper strip carrier (2) with respect to the connection adapter (5) by contact surfaces (26) in the connection adapter (5) and contact surfaces of the supporting element (9), **characterized in that** the blocking pin (11) is a round pin (12) with a conical bevel (21) and locking edge (22), the conical bevel (21) upon insertion being able to slide via a latching edge (23) into a hole (20), and, after the latching, the round pin (12) being able to be retained at the locking edge (22) by the latching edge (23).

2. Wiper blade according to Claim 1, **characterized in that** the supporting element (9) is a flat spring steel strip (10).

3. Wiper blade according to Claim 1 or 2, **characterized in that** the contact surfaces of the supporting element (9) are formed by a cut-out (14).

4. Wiper blade according to one of the preceding claims, **characterized in that** the round pin (12) has a stop edge (24) for the supporting element (9).

5. Wiper blade according to one of the preceding claims, **characterized in that** the contact surfaces (26) in the connection adapter (5) are formed by a partially opened cylindrical surface (25).

6. Wiper blade according to one of the preceding claims, **characterized in that** the hole (20) is arranged perpendicularly to the supporting element (9), which is in the form of flat spring steel (10).

7. Wiper blade according to Claim 6, **characterized in that** the hole (20) is arranged laterally on the edge of the spring steel strip (10).

8. Wiper blade according to one of the preceding claims, **characterized in that** the wiper strip carrier (2) consists of plastic and a wiper lip (3) is integrally formed thereon by co-extrusion.

9. Wiper blade according to one of the preceding claims, **characterized in that** the wiper strip carrier (2) is composed of plastic and a spoiler (4) is integrally formed thereon by co-extrusion.

## Revendications

1. Balai d'essuie-glace avec un adaptateur de raccordement (5) et au moins une lame d'essuyage (1) et un support de lame d'essuyage (2) élastiquement flexible, notamment en matière plastique, qui reçoit en section transversale un élément porteur (9) dans un ou plusieurs canaux (17), l'élément porteur (9) étant entouré au moins partiellement, dans la zone de l'adaptateur de raccordement (5), dans des évidements (15) du support de lame d'essuyage (2), par des éléments de retenue (16) de l'adaptateur de raccordement (5), de telle sorte que l'adaptateur de raccordement (5) est relié au support de lame d'essuyage (2) par l'élément porteur (9), une broche de blocage (11) insérée dans l'adaptateur de raccordement (5) fixant l'élément porteur (9) dans sa position dans la direction longitudinale du support de lame d'essuyage (2) par rapport à l'adaptateur de raccordement (5) par des surfaces d'appui (26) dans l'adaptateur de raccordement (5) ainsi que des surfaces d'appui de l'élément porteur (9), **caractérisé en ce que en ce que** la broche de blocage (11) est une broche ronde (12) avec un biseautage conique (21) et un bord d'arrêt (22), le biseautage conique (21) pouvant glisser sur un bord d'encliquetage (23) lors de l'insertion dans un alésage (20) et, après l'encliquetage, la broche ronde (12) pouvant être maintenue sur le bord d'arrêt (22) par le bord d'encliquetage (23).

2. Balai d'essuie-glace selon la revendication 1, **caractérisé en ce que** l'élément porteur (9) est une bande d'acier à ressort plate (10).

3. Balai d'essuie-glace selon la revendication 1 ou 2, **caractérisé en ce que** les surfaces d'appui de l'élément porteur (9) sont formées par une découpe (14).

4. Balai d'essuie-glace selon l'une quelconque des revendications précédentes, **caractérisé en ce que** la broche ronde (12) présente un bord de butée (24) pour l'élément porteur (9).

5. Balai d'essuie-glace selon l'une quelconque des revendications précédentes, **caractérisé en ce que** les surfaces d'appui (26) dans l'adaptateur de raccordement (5) sont formées par une surface cylindrique (25) partiellement ouverte.

6. Balai d'essuie-glace selon l'une quelconque des revendications précédentes, **caractérisé en ce que** l'alésage (20) est agencé perpendiculairement à l'élément porteur (9) réalisé sous forme d'acier à ressort plat (10) .

7. Balai d'essuie-glace selon la revendication 6, **caractérisé en ce que** l'alésage (20) est agencé latéralement sur le bord de la bande d'acier à ressort (10) .

8. Balai d'essuie-glace selon l'une quelconque des revendications précédentes, **caractérisé en ce que** le support de lame d'essuyage (2) est constitué de matière plastique et une lèvre d'essuyage (3) est rapportée de manière coextrudée.

9. Balai d'essuie-glace selon l'une quelconque des revendications précédentes, **caractérisé en ce que** le support de lame d'essuyage (2) est constitué de matière plastique et un spoiler (4) est rapporté de manière coextrudée.
